# EUROPÄISCHE PATENTSCHRIFT

(11) **EP 3 345 866 B1**
(45) Veröffentlichungstag und Bekanntmachung des Hinweises auf die Patenterteilung: **06.10.2021**
(21) Anmeldenummer: 18150034.9
(22) Anmeldetag: 08.12.2015
(51) Int. Cl.: C01B 33/107, C07F 7/21, C07F 7/08

(54) **VERFAHREN ZUM HERSTELLEN EINER CYCLISCHEN SILANVERBINDUNG**
METHOD FOR PRODUCING A CYCLIC SILANE COMPOUND
PROCÉDÉ DE FABRICATION D'UN COMPOSÉ DE SILANE CYCLIQUE

(30) Priorität: 15.12.2014 DE 102014118658; 14.04.2015 DE 102015105690
(43) Veröffentlichungstag der Anmeldung: 11.07.2018
(62) Teilanmeldung aus: 15841039.9
(73) Patentinhaber: Evonik Operations GmbH, 45128 Essen (DE)
(72) Erfinder: Wagner, Matthias, 61194 Niddatal (DE); Lerner, Hans-Wolfram, 61440 Oberursel (DE); Tillmann, Jan, 80798 München (DE); Moxter, Maximilian, 64546 Mörfelden-Walldorf (DE)
(74) Vertreter: Scholz, Volker

(56) Entgegenhaltungen:
- WO-A1-2011/094191
- US-A- 3 914 210
- US-A- 4 387 200
- US-A- 5 942 637
- US-A1- 2014 012 029
- JUPPO M ET AL: "TRIMETHYLALUMINUM AS A REDUCING AGENT IN THE ATOMIC LAYER DEPOSITION F TI(AI)N THIN FILMS", CHEMICAL VAPOR DEPOSITION, WILEY-VCH VERLAG, WEINHEIM, DE, Bd. 7, Nr. 5, 1. September 2001 (2001-09-01), Seiten 211-217, XP001099852, ISSN: 0948-1907, DOI: 10.1002/1521-3862(200109)7:5<211::AID-CVDE 211>3.0.CO;2-L

## Beschreibung

Die vorliegende Erfindung betrifft ein Verfahren zum Herstellen einer cyclischen Silanverbindung.

Perhalogenierte Oligo- und Polysilane, wie perhalogeniertes cyclisches Hexasilan, sind die Grundlage für verschiedenste material-orientierte Anwendungen, wie beispielsweise die Herstellung von amorphem Silicium, leitenden Polymeren, Silicium-Schichten oder auch Wasserstoffspeichermedien, die wiederum in vielen Bereichen der Industrie von großer Bedeutung sind.

Im Stand der Technik sind bereits einige Verfahren zur Herstellung von perhalogenierten Cyclohexasilanverbindungen bekannt. US 2014/0012030 A1 beschreibt beispielsweise ein Verfahren zum Herstellen einer cyclischen Silanverbindung, indem eine halogenierte Silanverbindung in der Anwesenheit eines Ammonium- bzw. Phosphoniumsalzes und einer als Chelat-Komplex fungierenden Verbindung bei 0 bis 120°C in einem Lösungsmittel umgesetzt wird.

JP 2013 095697A betrifft ein Verfahren zum Herstellen eines Hexasilan-Anions, wobei Trichlorsilan tropfenweise zu einem Gemisch aus [*n*Bu₄N]Cl, Diisopropylethylamin und 1,2-Dichlorethan bei 25°C gegeben wird. Das Gemisch wird zunächst bei 25°C für zwei Stunden und schließlich bei 50°C für 24 Stunden gerührt, um [*n*Bu₄N]₂[Si₆Cl₁₄] zu erhalten.

In JP 2013 203601A wird Cyclohexasilan in einem Reaktor durch Cyclisierung von trihalogenierten Silanen hergestellt, wobei zunächst die entsprechenden Anionen von [Si₆X₁₄]²⁻ gebildet werden. Diese werden filtriert und zu den entsprechenden Cyclohexasilanverbindungen reduziert.

Präparativ weniger aufwendig ist das in WO 2011 094191A1 beschriebene Verfahren zur Herstellung des cyclischen Hexasilan-Anions [Si₆Cl₁₄]²⁻. Dieses wird ausgehend von Trichlorsilan durch Umsetzung mit einem tertiären Polyaminliganden, genauer einem alkylsubstituierten Polyalkylenpolyamin, und einem Deprotonierungsmittel, wie einem tertiären Amin, erhalten.

DE 3126240 C2 betrifft ein Verfahren zur Herstellung von metallischem Silicium, in dem die Umsetzung von Si₂Cl₆ mit einem Katalysator aus der Gruppe der Ammoniumhalogenide, tertiären organischen Amine, quartären Ammonium- und Phosphoniumhalogenide bei einer Temperatur von 70 bis 150°C zu höheren Silanen als Si₂Cl₆ beschrieben wird. Als Katalysator wird beispielsweise Tetrabutylphosphoniumchlorid verwendet. Allerdings werden in dieser Druckschrift keine genaueren Angaben zu den Strukturen oder der Produktzusammensetzung der erhaltenen perchlorierten Polysilane gemacht.

Ein ursprünglicher Ansatz beruht auf den Arbeiten von Kipping et al. (J. Chem. Soc. Trans. 1921, 119, 830) und Gilman et al. (Tetrahedron Lett. 1960, 1, 5; J. Am. Chem. Soc. 1961, 83, 1921). Nach diesem Ansatz wird Ph₂SiCl₂ mit Lithium oder Natrium zur Reaktion gebracht. Hierbei entstehen Gemische der perphenylierten S₄₋₆-Ringe. Hengge et al. beschreibt die Reaktion zu den perchlorierten Ringen mit HCl und katalytischen Mengen AlCl₃. Der Einsatz mit HBr führt zu den entsprechenden perbromierten Ringen (Angew. Chem. 1963, 75, 677; J. Organomet. Chem. 1977, 125, C29; Z. Anorg. Allg. Chem. 1979, 130, 123; Monatsh. Chem. 1976, 107,371; Monatsh. Chem. 1979, 110, 1295).

Der modernere Ansatz geht von zweifach Halogenid-komplexiertem perchloriertem Cyclohexasilan aus. Die Synthese von Si₆Cl₁₂, wobei im ersten Schritt eine Perhydrierung mit Lithiumaluminiumhydrid erfolgt und anschließend eine Perchlorierung mit Chlor bei -90°C durchgeführt wird, ist bekannt.

Nachteilig bei der Synthese sind die extrem aufwendige Prozessführung, die damit verbundenen hohen Kosten und das hohe Gefahrenpotential. Die verwendeten Chemikalien sind sehr kostenintensiv und die Atomökonomie ist schlecht. Zudem besteht bei der Hydrierung die Gefahr, dass SiH₄ gebildet wird, welches sich bei Kontakt mit Luft explosionsartig zersetzt. Auch die Chlorierung mit gasförmigem Cl₂ ist gefährlich.

Nachteilig bei allen bekannten Verfahren zum Herstellen von perhalogeniertem Cyclohexasilan über eine Wurtz-Kupplung ist die schlechte Selektivität der Reaktion. 6-gliedrige Ringe werden hierbei nur in geringen Ausbeuten erhalten und zudem zusammen mit anderen gebildet. Die anschließende Chlorierung mit gasförmigen HCl ist zudem äußerst gefährlich.

Ferner ist die Umsetzung von [Si₆Cl₁₄]²⁻ mit Grignard- oder Lithiumorganyl-Verbindungen zu permethyliertem cyclischen Hexasilan Si₆Me₁₂ bekannt (Boudjouk et al., J. Am. Chem. Soc. 2001, 123, 8117; US 20140012029 A1; DE 6980840372 T2).

Zudem kann Si₆Me₁₂ über eine Wurtz-Reaktion erhalten werden, wobei Dichlordimethylsilan mit Lithium umgesetzt wird. In dieser Reaktion entstehen eine Reihe von verschiedenen cyclischen Silanen (Laguerre et al., J. C. S. Chem. Comm. 1978, 272).

US 2014/012029 A1 offenbart ein Verfahren zum Herstellen einer cyclischen Silanverbindung der Formel Si₆R₁₂ durch Umsetzung von [X]₂(S₆Cl₁₄) mit einem Aluminium-basierten Reduktionsmittel in mindestens einem organischen Lösungsmittel, wobei X gleich oder verschieden ein Gegenkation ist und bevorzugt ausgewählt ist aus organosubstituiertem Ammonium, organosubstituiertem Phosphonium, Alkalimetallionen und [(PEDETA)(H₂SiCl)⁺

WO 2011/094191 A1 offenbart ein Verfahren zum Herstellen von Cyclohexasilan, wobei als Reduktionsmittel Metallhydrid eingesetzt wird.

US 5942637 A offenbart ein Verfahren zum Herstellen von Cyclohexasilan, wobei als Reduktionsmittel Metallhydrid eingesetzt wird.

Es ist eine Aufgabe der vorliegenden Erfindung, ein Verfahren zum Herstellen einer cyclischen Silanverbindung bereitzustellen. Insbesondere soll ein Verfahren bereitgestellt werden, das die selektive Darstellung der cyclischen Verbindungen Si₆Cl₁₂ und Si₆Me₁₂ in sehr guten Ausbeuten und hoher Reinheit gewährleistet. Das Verfahren soll die Darstellung der Zielmoleküle zudem in einfacher, ungefährlicher und kostengünstiger Weise ermöglichen.

Die Aufgabe wird gelöst durch ein Verfahren zum Herstellen einer cyclischen Silanverbindung der Formel Si₆R₁₂, durch Umsetzung von [X]₂[Si₆Cl₁₄] mit AlR₃ in mindestens einem organischen Lösungsmittel, wobei R Chlor oder Methyl ist und X gleich oder verschieden ein Gegenkation ist und bevorzugt ausgewählt ist aus organosubstituiertem Ammonium, organosubstituiertem Phosphonium, Alkalimetallionen und [(PEDETA) (H₂SiCl)]+.

Es ist bevorzugt, dass X organosubstituiertes Ammonium und/oder organosubstituiertes Phosphonium ist.

Im Rahmen der vorliegenden Erfindung sind organosubstituiertes Ammonium [R"₄N]⁺ und organosubstituiertes Phosphonium [R"₄P]⁺ vorzugsweise vollständig organosubstituiert. Als Organosubstituenten können vorzugsweise Aryl, Alkyl, Alkenyl und dergleichen und gemischte Organosubstituenten ausgewählt werden.

Im Rahmen der vorliegenden Erfindung handelt es sich bei Alkalimetallionen vorzugsweise um Li⁺, Na⁺ und Ka⁺,

Erfmdungsgemäß handelt es sich bei PEDETA des Gegenions [(PEDETA)(H₂SiCl)]⁺, um Pentaethyldiethylentriamin.

In einer besonderen bevorzugten Ausführungsform ist jeder Organosubstituent des organosubstituierten Ammoniums oder des organosubstituierten Phosphoniums unabhängig ausgewählt aus Ethyl, Propyl, Butyl und Phenyl.

Ferner ist bevorzugt, dass das organische Lösungsmittel ausgewählt ist aus Benzol, Cyclohexan, n-Hexan, n-Heptan, Chloroform und Dichlormethan.

In einer weiteren bevorzugten Ausführungsform wird das Verfahren in einem Temperaturbereich von 20°C bis 120°C durchgeführt.

Des Weiteren ist bevorzugt, dass das Verhältnis von [X]₂[Si₆Cl₁₄] zu AlR₃ in einem Bereich von 5:1 bis 1:10, bevorzugt 1:1 bis 1:5, noch bevorzugter bei 1:2 liegt.

In einer bevorzugten Ausführungsform wird das erhaltene Si₆Cl₁₂ in einer Folgereaktion, vorzugsweise mit Chlor oder Brom, gespalten.

Überraschenderweise konnte festgestellt werden, dass das erfindungsgemäße Verfahren zum Herstellen einer cyclischen Silanverbindung die selektive Darstellung der cyclischen Verbindungen Si₆Cl₁₂ und Si₆Me₁₂ in sehr guten Ausbeuten (> 80%) und hoher Reinheit gewährleistet. Insbesondere entstehen neben der Zielverbindung keine weiteren Siliciumverbindungen. Zudem ist das Produkt Si₆Cl₁₂ des erfindungsgemäßen Verfahrens kohlenstofffrei und somit für weitere Verwendungen, wie beispielsweise als Precursor für Halbleiter- und Photovoltaik-Materialien, geeignet. Die Verbindungen können isoliert und durch Einkristall-Röntgenstrukturanalyse und NMR Spektroskopie zweifelsfrei charakterisiert werden.

Ein weiterer Vorteil des erfindungsgemäßen Verfahrens ist ferner, dass das Salz [X]₂[Si₆Cl₁₄] auf einfachem Weg, ausgehend von diversen perchlorierten Silanen und vor allem aber auch aus HSiCl₃, zugänglich ist (siehe z.B. DE102014118658A3; DE102013021306A1).

Das erfindungsgemäße Verfahren ermöglicht eine einstufige und kostengünstige Synthese der cyclischen Silanverbindung. Bei der vorliegenden Reaktion handelt es sich um eine Dekomplexierung bzw. um eine Chlorid-Abstraktion. Versuche ergaben, dass die Dekomplexierung mit anderen Lewis-Säuren, wie AlBr₃ und FeCl₃, nicht zu den gewünschten Produkten führt.

Das nach dem erfindungsgemäßen Verfahren erhaltene Si₆Cl₁₂ kann durch verschiedene Folgereaktionen gespalten werden. So kann es mit Chlorgas oder auch Brom in offenkettige und / oder kürzere perhalogenierte Silane überführt werden. Ferner kann durch chemische, elektrochemische, photolytische oder thermolytische Spaltung der formale Synthesebaustein [:SiCl₂] erhalten werden.

Zudem kann durch das erfindungsgemäße Verfahren auch das permethylierte cyclische Hexasilan Si₆Me₁₂ durch einfache Umsetzung mit AlMe3 in sehr guten Ausbeuten (> 80%) erhalten werden.

Weitere Merkmale und Vorteile der Erfindung ergeben sich aus der nachfolgenden Beschreibung, Zeichnungen und Ausführungsbeispielen. Dabei zeigt:
Fig. 1 ein ²⁹Si-NMR-Spektrum der cyclischen Silanverbindung Si₆Cl₁₂, hergestellt durch die Methode A, in C₆D₆ bei 99,4 MHz.
Fig. 2 ein ²⁹Si-NMR-Spektrum der Silanverbindung Si₆Cl₁₂, hergestellt durch die Methode B, in C₆D₆ bei 99,4 MHz.
Fig. 3 ein ²⁹Si-NMR-Spektrum der Silanverbindung Si₆Me₁₂ in CD₂Cl₂ bei 99,4 MHz.

²⁹Si-NMR-Spektren wurden mit einem Bruker Avance III HD 500 MHz Spektrometer aufgenommen; die Spektren wurden gegen den externen Standard SiMe₄ (*δ*(²⁹Si) = 0) kalibriert.

### Synthese von Si₆Cl₁₂

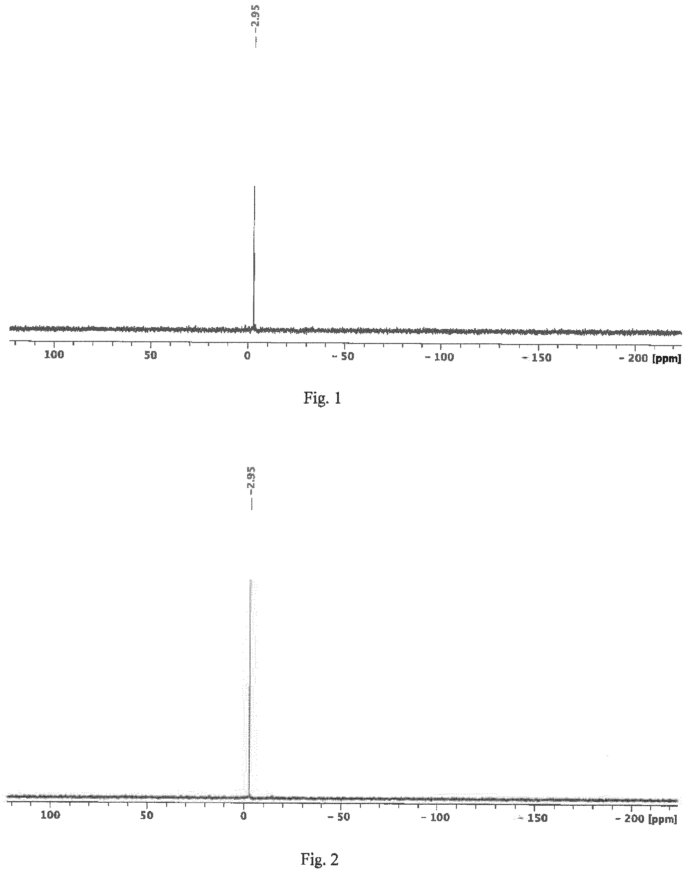

*Methode A:* [*n*Bu₄N]₂[Si₆Cl₁₄] (1,00 g, 0,87 mmol) und AlCl₃ (0,24 g, 1,80 mmol) wurden in Benzol (6 mL) vorgelegt und über Nacht bei Raumtemperatur gerührt. Anschließend wurde das Lösungsmittel im Vakuum entfernt. Der erhaltene farblose Rückstand wurde in trockenem Cyclohexan aufgenommen und die erhaltene Suspension für 0,5 h auf 80 °C erwärmt. Der Ansatz wurde filtriert und das Lösungsmittel des klaren Filtrates im Vakuum entfernt. Es wurden 0,50 g Si₆Cl₁₂ als farbloser Feststoff erhalten (Ausbeute: 0,84 mmol entspricht 97 %). Das ²⁹Si-NMR-Spektrum (C₆D₆; 99,4 MHz; siehe Fig. 1) des Feststoffes zeigte die chemische Verschiebung von Si₆Cl₁₂ (-2,95 ppm). Eine röntgenkristallographische Untersuchung von Einkristallen, ausgewählt aus dem erhaltenen Feststoff, ergab die Kristallstruktur von Si₆Cl₁₂. Im erhaltenen Filterkuchen konnten die Einkristallröntgenstrukturen von [*n*Bu₄N][AlCl₄] bzw. [*n*Bu₄N][AlCl₄]*C₆H₆ bestimmt werden.

*Methode B:* [*n*Bu₄N]₂[Si₆Cl₁₄] (5,10 g, 4,44 mmol) und AlCl₃ (1,23 g, 9,23 mmol) wurden in Benzol (45 mL) vorgelegt und über Nacht bei Raumtemperatur gerührt. Anschließend wurde das Lösungsmittel im Vakuum entfernt. Der erhaltene farblose Rückstand wurde in trockenem Hexan aufgenommen und die erhaltene Suspension für 0,5 h auf 80°C erwärmt. Der Ansatz wurde filtriert, auf 10 mL eingeengt und zur Kristallisation bei -72°C gelagert. Es wurden 2,51 g Si₆Cl₁₂ als farbloser, kristalliner Feststoff erhalten (Ausbeute: 4,23 mmol entspricht 95 %) erhalten. Das ²⁹Si-NMR-Spektrum (C₆D₆; 99,4 MHz; siehe Fig. 2) des Feststoffs zeigte die chemische Verschiebung von Si₆Cl₁₂ (-2,95 ppm). Eine röntgenkristallographische Untersuchung der Einkristalle verifizierte ebenfalls das erhaltene Produkt als Si₆Cl₁₂.

*Methode C:* [*n*Bu₄N]₂[Si₆Cl₁₄] (5,8 g, 5,1 mmol), das prozessbedingt zusätzlich [*n*Bu₄N]Cl (2,2 g, 7,0 mmol) enthält, und AlCl₃ (2,4 g, 18,0 mmol) wurden in Benzol (60 mL) vorgelegt und über Nacht bei Raumtemperatur gerührt. Anschließend wurde das Lösungsmittel im Vakuum entfernt. Der erhaltene intensiv gelbe Rückstand wurde in Hexan (50 mL) aufgenommen und für 0,5 h auf 80 °C erwärmt. Der Überstand wurde filtriert, das klare, farblose Filtrat eingeengt und zur Kristallisation bei -72°C gelagert. Nach 24 Stunden wurde die überstehende Lösung dekantiert und 0,5 g Feststoff wurden isoliert. Die Lösung wurde auf ca. 10 mL eingeengt und zur weiteren Kristallisation bei -72°C gelagert. Es wurde Si₆Cl₁₂ als farbloser Feststoff isoliert (Ausbeute insgesamt: 2,6 g 87 %). Das ²⁹Si-NMR-Spektrum des Feststoffes zeigte die chemische Verschiebung von Si₆Cl₁₂ (-2,95 ppm). Eine röntgenkristallographische Untersuchung von Einkristallen, ausgewählt aus dem erhaltenen Feststoff, ergab die Kristallstruktur von Si₆Cl₁₂. Im erhaltenen Filterkuchen konnten die Einkristallröntgenstrukturen von [*n*Bu₄N][AlCl₄] und [*n*Bu₄N][AlCl₄]*C₆H₆ bestimmt werden.

### Synthese von Si₆Me₁₂

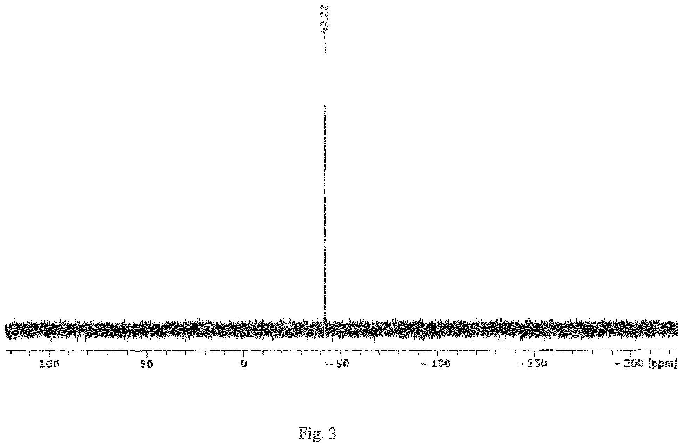

*Methode A:* [*n*Bu₄N]₂[Si₆Cl₁₄] (1,00 g, 0,87 mmol) wurde mit einer AlMe₃/Heptan-Lösung (1,75 mL, 3,5 mmol, 2 mol/L) überschichtet und anschließend mit Dichlormethan (5 mL) versetzt. Der Ansatz wurde für 7 Tage bei Raumtemperatur gerührt. Anschließend wurde das Lösungsmittel im Vakuum entfernt. Der erhaltene rotbraune Rückstand wurde in 4 mL Hexan aufgenommen und für 10 min. auf 80°C erwärmt. Der Überstand wurde filtriert, das klare, farblose Filtrat auf 1 mL eingeengt und zur Kristallisation bei -72°C gelagert. Nach 48 Stunden wurde die überstehende Lösung dekantiert und der farblose Feststoff im Vakuum getrocknet. Es wurden 249 mg Si₆Me₁₂ erhalten (Ausbeute: 0,714 mmol entspricht 82 %). Das ²⁹Si-NMR-Spektrum (CD₂Cl₂; 99,4 MHz; siehe Fig. 3) des Feststoffes zeigte die chemische Verschiebung von Si₆Me₁₂ (-42,2 ppm).

## Patentansprüche

1. Verfahren zum Herstellen einer cyclischen Silanverbindung der Formel Si₆R₁₂, durch Umsetzung von [X]₂[Si₆Cl₁₄] mit AlR₃ in mindestens einem organischen Lösungsmittel, wobei R Chlor oder Methyl ist und X gleich oder verschieden ein Gegenkation ist und bevorzugt ausgewählt ist aus organosubstituiertem Ammonium, organosubstituiertem Phosphonium, Alkalimetallionen und [(PEDETA)(H₂SiCl)]⁺.

2. Verfahren zum Herstellen einer cyclischen Silanverbindung nach Anspruch 1, wobei X organosubstituiertes Ammonium und/oder organosubstituiertes Phosphonium ist.

3. Verfahren zum Herstellen einer cyclischen Silanverbindung nach Anspruch 1 oder 2, wobei jeder Organosubstituent des organosubstituierten Ammoniums oder des organosubstituierten Phosphoniums unabhängig ausgewählt ist aus Ethyl, Propyl, Butyl und Phenyl.

4. Verfahren zum Herstellen einer cyclischen Silanverbindung nach einem der vorhergehenden Ansprüchen 1-3, wobei das organische Lösungsmittel ausgewählt ist aus Benzol, Cyclohexan, n-Hexan, n-Heptan, Chloroform und Dichlormethan.

5. Verfahren zum Herstellen einer cyclischen Silanverbindung nach einem der vorhergehenden Ansprüchen 1-4, wobei das Verfahren in einem Temperaturbereich von 20°C bis 120°C durchgeführt wird.

6. Verfahren zum Herstellen einer cyclischen Silanverbindung nach einem der vorhergehenden Ansprüchen 1-5, wobei das Verhältnis von [X]₂[Si₆Cl₁₄] zu AlR₃ in einem Bereich von 5:1 bis 1:10, bevorzugt 1:1 bis 1:5, noch bevorzugter 1:2 liegt.

## Claims

1. Process for preparing a cyclic silane compound of the formula Si₆R₁₂ by reaction of [X]₂[Si₆Cl₁₄] with AlR₃ in at least one organic solvent, wherein R is chlorine or methyl and X, which may be identical or different, is a countercation and is preferably selected from organo-substituted ammonium, organo-substituted phosphonium, alkali metal ions and [(PEDETA) (H₂SiCl)]⁺.

2. Process for preparing a cyclic silane compound according to Claim 1, wherein X is organo-substituted ammonium and/or organo-substituted phosphonium.

3. Process for preparing a cyclic silane compound according to Claim 1 or 2, wherein each organic substituent of the organo-substituted ammonium or of the organo-substituted phosphonium is independently selected from ethyl, propyl, butyl and phenyl.

4. Process for preparing a cyclic silane compound according to any of the preceding Claims 1-3, wherein the organic solvent is selected from benzene, cyclohexane, *n*-hexane, *n*-heptane, chloroform and dichloromethane.

5. Process for preparing a cyclic silane compound according to any of the preceding Claims 1-4, wherein the process is conducted in a temperature range from 20°C to 120°C.

6. Process for preparing a cyclic silane compound according to any of the preceding Claims 1-5, wherein the ratio of [X]₂[Si₆Cl₁₄] to AlR₃ is in a range from 5:1 to 1:10, preferably 1:1 to 1:5, more preferably 1:2.

## Revendications

1. Procédé pour la préparation d'un composé de silane cyclique de formule Si₆R₁₂, par transformation de [X]₂[Si₆Cl₁₄] avec AlR₃ dans au moins un solvant organique, R étant chlore ou méthyle et X, identique ou différent, étant un contre-cation et étant préférablement choisi parmi ammonium organosubstitué, phosphonium organosubstitué, des ions de métal alcalin et [(PEDETA) (H₂SiCl)]⁺.

2. Procédé pour la préparation d'un composé de silane cyclique selon la revendication 1, X étant ammonium organosubstitué et/ou phosphonium organosubstitué.

3. Procédé pour la préparation d'un composé de silane cyclique selon la revendication 1 ou 2, chaque substituant organique de l'ammonium organosubstitué ou du phosphonium organosubstitué étant indépendamment choisi parmi éthyle, propyle, butyle et phényle.

4. Procédé pour la préparation d'un composé de silane cyclique selon l'une quelconque des revendications précédentes 1 à 3, le solvant organique étant choisi parmi le benzène, le cyclohexane, le *n*-hexane, le *n-*heptane, le chloroforme et le dichlorométhane.

5. Procédé pour la préparation d'un composé de silane cyclique selon l'une quelconque des revendications précédentes 1 à 4, le procédé étant mis en œuvre dans une plage de température de 20 °C à 120 °C.

6. Procédé pour la préparation d'un composé de silane cyclique selon l'une quelconque des revendications précédentes 1 à 5, le rapport de [X]₂[Si₆Cl₁₄] sur AlR₃ se situant dans une plage de 5 : 1 à 1 : 10, préférablement de 1 : 1 à 1 : 5, plus préférablement de 1 : 2.
